Europäisches Patentamt

European Patent Office

Office européen des brevets

(11) Veröffentlichungsnummer: **0 398 073**
**A2**

(12) **EUROPÄISCHE PATENTANMELDUNG**

(21) Anmeldenummer: 90108302.2

(51) Int. Cl.⁵: **G01B 21/04**

(22) Anmeldetag: 02.05.90

(30) Priorität: 05.05.89 DE 3914849

(43) Veröffentlichungstag der Anmeldung:
**22.11.90 Patentblatt 90/47**

(84) Benannte Vertragsstaaten:
**CH DE FR GB IT LI SE**

(71) Anmelder: **Mauser-Werke Oberndorf GmbH**
**Teckstrasse 11**
**D-7238 Oberndorf(DE)**

(72) Erfinder: **Zink, Joseph**
**Weihergasse 33**
**D-7230 Schramberg(DE)**

(74) Vertreter: **Hofmann, Gerhard, Dipl.-Ing.**
**Patentassessor et al**
**Stephanstrasse 49**
**D-8500 Nürnberg(DE)**

(54) **Messeinrichtung.**

(57) Mit der Erfindung wird eine Meßeinrichtung mit einem Ständer (2) vorgeschlagen, an dem ein Meßtaster (10) höhenverschiebbar an einem elektromotorisch angetriebenen Schlitten (9) angeordnet ist. Der Ständer (2) ist in den X- und Y-Koordinaten frei bewegbar und um seine Längsachse drehbar. Die Bewegungen des Ständers (2) auf dem Meßtisch (1) werden durch eine Wegerfassungseinrichtung erfaßt. Als Wegerfassungseinrichtung dient im bevorzugten Fall ein Laser-Interferometer (16, 17, 20) mit einer automatischen Nachfürregelung (26).

FIG.1

EP 0 398 073 A2

## Meßeinrichtung

Die Erfindung betrifft eine Meßeinrichtung mit einem Ständer, an dem ein einen Meßtaster tragender, elektromotorisch angetriebener Schlitten höhenverschiebbar angeordnet ist.

Eine Meßeinrichtung der vorgenannten Art ist als Höhenmeßgerät aus der DE 31 09 856 C2 bekannt. Dabei übt der an einem Schlitten starr angebrachte Meßtaster in Meßposition auf eine Meßstelle eine Meßkraft aus. Die konstante Meßkraft wird durch eine dem Elektromotor nachgeschaltete Magnetfeldkupplung erzeugt. Diese bekannte Meßeinrichtung erlaubt nur Messungen in der Z-Koordinatenrichtung. Die Verschiebung des Höhenmeßgerätes auf dem Meßtisch ist einstellbar und erfolgt in der Praxis auf Luftlagern bzw. Luftkissen, welche durch eine integrierte, batteriebetriebene Pumpe erzeugt werden. An das bekannte Höhenmeßgerät ist ein Tischrechner und eine Anzeigevorrichtung drahtlos über Infrarotlicht verbunden. Ausgehend von dem vorgenannten Stand der Technik ist es Aufgabe der Erfindung, eine Meßeinrichtung der eingangs genannten Art zu schaffen, welche unter Beibehaltung der leichten Handhabung über die eindimensionale Messung hinaus auf eine dreidimensionale Messung erweitert ist.

Erfindungsgemäß wird diese Aufgabe durch die Merkmale der Patentansprüche 1 und 4 gelöst. Erfinderische Ausgestaltungen und Weiterbildungen dieser Lösungsmerkmale sind den weiteren Patentansprüchen 2 und 3 zu entnehmen.

Diese neue Meßeinrichtung mit einer hinreichenden Genauigkeit im Werkstattbereich besitzt ein flexibles und in die zusätzlichen Koordinaten X und Y erweitertes Meßvolumen. Dadurch erlaubt diese neue Meßeinrichtung das Messen von Raumkoordinaten in einem relativ großen Meßvolumen, wobei der Meßtisch als Arbeitsplatte dient und eine bedienungssichere Handhabung durch eine manuelle Antastung der X- und Y-Koordinaten zusätzlich zu der motorisch abfahrbaren Z-Koordinate gegeben ist. Dadurch ist eine manuelle bzw. halbautomatisch, allseitige Antastung des Werkstückes mit einfachen Mitteln erreicht worden.

Die Wegerfassung mit dem Laser-Interferometer-System bietet außerdem den großen Vorteil, daß der Meßtisch von allen Seiten und auch von oben beladbar ist. Ein weiterer grundsätzlicher Vorteil besteht darin, daß der Ständer des Höhenmeßgerätes bzw. der neuen Meßeinrichtung auf dem Meßtisch frei bewegbar ist und das jeweils eingesetzte Wegerfassungssystem die X- und Y-Koordinaten in allen Bewegungsrichtungen exakt erfaßt. Durch die automatische Nachführeinrichtung erreicht das Laserlicht den Spiegelaufsatz des Ständers in jeder Position. In dem eingesetzten Rechner werden die erfaßten Daten der Polar-Koordinaten in entsprechende Längenmaße für die X- und Y-Koordinaten umgerechnet und in der Anzeigeeinheit sichtbar gemacht.

Im Falle des Einsatzes eines Laser-Interferometers sind sowohl eine Säule als auch zwei Säulen mit eingesetztem Interferometer einsetzbar.

Der Meßtaster kann sowohl ein starr eingebauter als auch ein schaltender oder ein messender Meßtaster sein.

Durch die Möglichkeit der manuellen Antastung wird der sonst üblicherweise bei 3-D-Meßmaschinen notwendige hohe Schulungsaufwand vermieden, weil das Basiswissen eines Facharbeiters bei dieser Meßeinrichtung auch für 3-D-Messungen bereits ausreicht. Der Freiheitsgrad der Antastung ist in keinem Fall eingeschränkt.

In der Zeichnung sind Beispiele der Erfindung dargestellt. Es zeigen

Figur 1 eine Meßeinrichtung mit einem Laser-Interferometer in vereinfachter perspektivischer Ansicht

Figur 2 eine Meßeinrichtung mit einem Inkremental-Meßsystem in vereinfachter perspektivischer Ansicht.

Auf einem Meßtisch 1 befindet sich eine Meßeinrichtung aus einem Ständer 2, der mit seinem Fuß 3 auf dem Meßtisch 1 bewegbar ist. Für eine leichte Verschiebung dieses Ständers 2 sorgt ein einstellbares Luftkissen zwischen der Unterseite des Fusses 3 und dem Meßtisch 1, welches durch eine integrierte und batteriebetriebene Pumpe erzeugt wird.

Durch einen im Ständer 2 vorgesehenen Elektromotor 4 wird ein Antriebsrad 5 angetrieben, welches ein Band oder ein Zugseil 6 oder dergleichen unter Zwischenschaltung einer Magnetfeldkupplung 7 über eine obere Umlenkrolle 8 bewegt. Das Band 6 ist mit einem Schlitten 9 fest verbunden, der den wahlweise starren, schaltenden oder messenden Meßtaster 10 mit dem Antastkopf 11 aufnimmt.

Der Meßtisch 1 ruht auf entsprechenden Füßen 12.

Außerhalb des Meßtisches 1 ist eine Halteeinrichtung 13 angeordnet, die aus einer Säule besteht und kopfseitig eine relativ zu der Halteeinrichtung 13 um die Längsachse 15 schwenkbare Aufnahmeeinrichtung 14 für die Laserlichtquelle 16 und dem teildurchlässigen Spiegel 17 aufweist. Die Aufnahmeeinrichtung 14 bzw. die Laserlichtquelle 16 ist mit einem Drehgeber 18 verbunden, um die Winkeländerungen der Bewegung des Ständers 2 in Bezug auf die Halteeinrichtung 13 exakt zu bestimmen.

Aus der Laserlichtquelle 16 trifft ein Lichtstrahl 19 einen Ringreflektor 20, der auf der oberen Stirnfläche 21 des Ständers 2 angebracht ist. Von diesem Reflektor wird der Lichtstrahl in Richtung des Pfeiles 22 zu dem teildurchlässigen Spiegel 17 reflektiert und von dort einem Rechner 23 mit Vor-Rück-Zähler und Multiplikatioren zugeleitet. Mit dem Rechner 23 ist ferner eine Meßwertauswerteeinrichtung 24 und eine Anzeigeeinheit 25 verbunden.

Um den Lichtstrahl 19 aus der Laserlichtquelle 16 ohne Winkelabweichung genau auf den Ringreflektor 20 senden zu können, ist in der Halteeinrichtung 13 eine automatische Nachführregeleinrichtung 26 für die Laserlichtquelle 16 mit dem Spiegel 17 bzw. für die Aufnahmeeinrichtung 14 eingerichtet. Dadurch wird das Laser-Interferometer unmittelbar und exakt jeder Bewegung des Ständers nachgeführt.

Es ist also möglich entweder die Aufnahmeeinrichtung 14 zusammen mit den ortsfest eingesetzten Einrichtungen 16 und 17 zu drehen und die Drehung in Winkelgraden zu erfassen oder stattdessen nur die Laserlichtquelle 16 und/oder den Spiegel 17 zu drehen und die Drehung zu messen. In beiden Fällen wird die Drehung durch die automatische Nachführregelung 26 bewirkt.

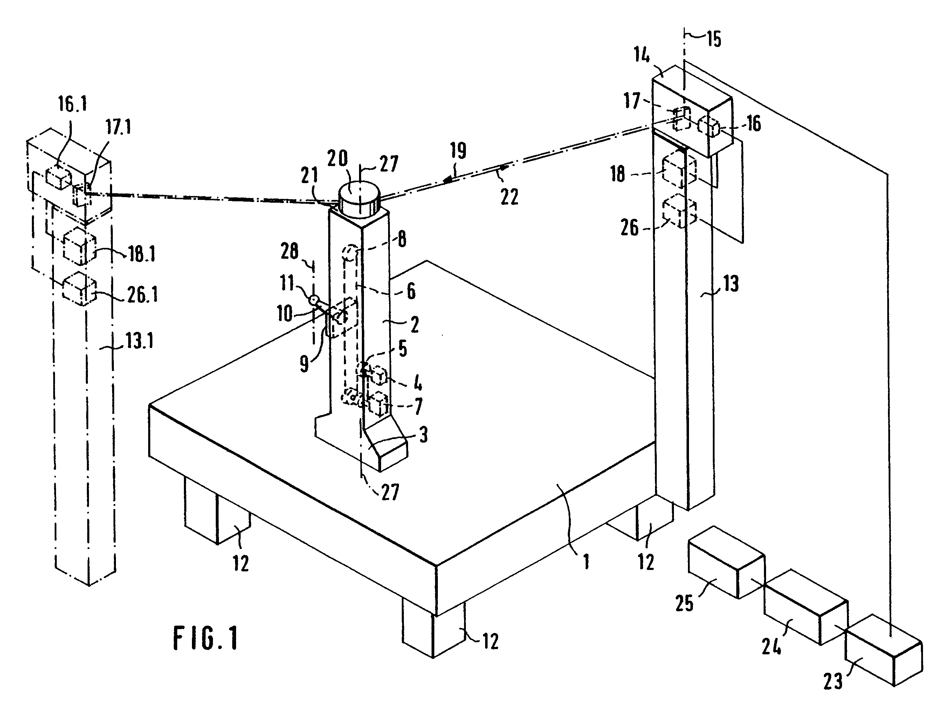

Wie in Figur 1 angedeutet worden ist, besteht die Möglichkeit des Einsatzes einer zweiten Halteeinrichtung 13. Mit einem Laserinterferometer 16.1 und 17.1 sowie allen Einrichtungen entsprechend der Halteeinrichtung 13.

Da der Ständer 2 um seine Längsachse 27 drehbar ist, ist es erforderlich, daß die Drehachse durch den Ringreflektor 20 gleichzeitig durch die senkrechte Achse 28 durch den Antastkopf 11 des Meßtasters 10 geht.

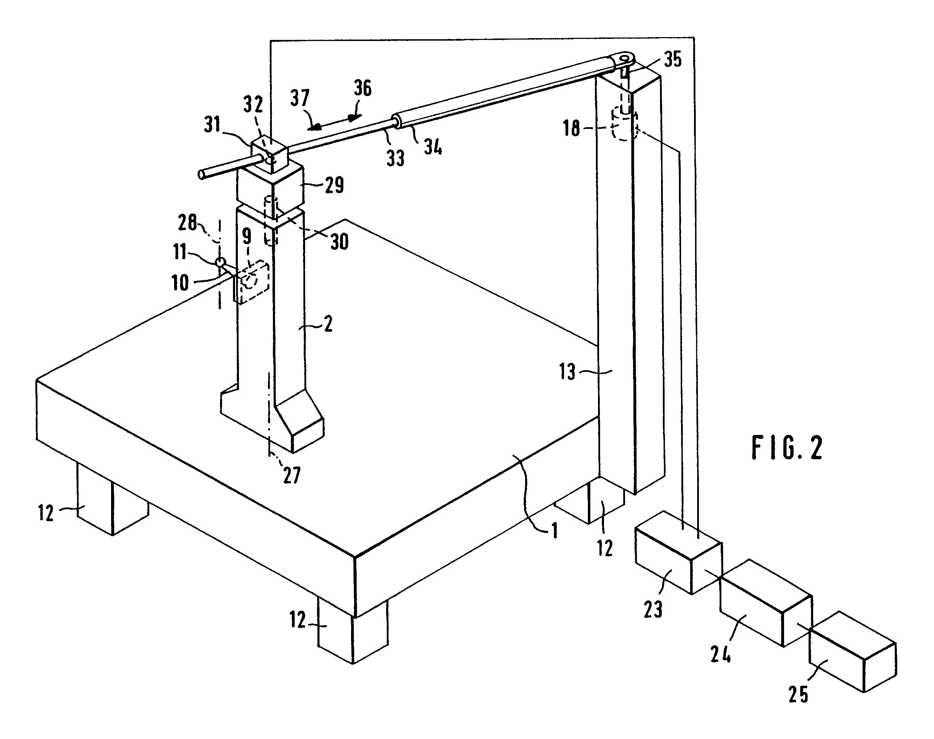

In Figur 2 ist eine Meßeinrichtung anderer Bauart dargestellt, wobei gleiche Elemente mit gleichen Bezugszeichen wie in Figur 1 versehen sind. Die Antriebseinrichtung, bestehend aus dem Elektromotor, der Magnetfeldkupplung und dem Getriebe, ist in dem Ständer 2 in gleicher Weise wie in Figur 1 eingebaut. Diese Antriebseinrichtung ist in Figur 2 der einfachheithalber nicht eingezeichnet worden. Der Ständer 2 ist um seine Längsachse 27 drehbar. Er besitzt einen Aufsatz 29, der relativ um eine Achse 30 zum Ständer 2 drehbar ist. Auf dem Aufsatz 29 befindet sich eine Halteeinrichtung 31 für die Aufnahme eines Sensors 32 und eines Verbindungsarms 33, der teleskopartig ineinander verschiebbar ist und ein inkrementales Meßsystem 34 aufweist. Der Verbindungsarm ist kopfseitig mit der Halteeinrichtung 13 schwenkbar über einen Zapfen 35 verbunden. Ferner befindet sich in der Halteeinrichtung 13 ein Drehgeber 18, welcher die Schwenkbewegung des Verbindungsarms 33 erfaßt und an den Rechner 23 zur Bestimmung der Längenmaße in den X- und Y-Koordinaten weitergibt.

Mit der Recheneinheit 23 ist ferner der Sensor 32 mit dem inkrementalen Meßsystem 34 verbunden. Außerdem sind an dem Rechner 23 eine Meßwertauswerteeinheit 24 und eine Anzeigeeinheit 25 angeschlossen. Die Signalerfassung des Sensors 32 ist immer auf die senkrechte Drehachse 28 durch den Antastkopf 11 des Meßtasters 10 bezogen.

Bei einer Bewegung des Ständers 2 auf dem Meßtisch 1 führen der Ständer 2 und der Aufsatz 29 relative Drehbewegungen zueinander durch. Der Verbindungsarm 33 schwenkt dabei jeweils um die Achse 35, wobei die jeweilige Winkeländerung durch den Drehgeber 18 aufgenommen wird. Gleichzeitig kann eine Verschiebung des Verbindungsarms 33 in den Pfeilrichtungen 36 oder 37 stattfinden. Diese geradlinien Bewegungen des Verbindungsarmes 33 werden von dem Sensor über das Wegerfassungssystem 34, welches aus einem Glasmaßstab bestehen kann, aufgenommen.

## Ansprüche

1. Meßeinrichtung mit einem Ständer, an dem ein einen Meßtaster tragender, elektromotorisch angetriebener Schlitten höhenverschiebbar angeordnet ist,
dadurch gekennzeichnet,
daß der Ständer (2) in den X- und Y-Koordinaten frei bewegbar und mit einer Wegerfassungseinrichtung in den X- und Y-Koordinaten eingerichtet ist.

2. Meßeinrichtung nach Anspruch 1,
dadurch gekennzeichnet,
daß der Ständer (2) auf seiner oberen Stirnfläche (21) mit einem Ringreflektor (20) versehen ist, dessen vertikale Drehachse (28) durch den Antastkopf (11) des Meßtasters (10) geht, wobei der Ringreflektor (20) mit zumindest einer vom Ständer (2) entfernten Laserlichtquelle (16) mit optischen Einrichtungen (17) und einer Nachführregeleinrichtung (26) sowie einer Signalverarbeitungseinrichtung (25, 24, 23) in Wirkverbindung steht.

3. Meßeinrichtung nach den Ansprüchen 1 und/oder 2,
dadurch gekennzeichnet,
daß die Nachführregeleinrichtung (26) für den Laserlichtstrahl (19) der Laserlichtquelle (16) aus einem Drehgeber (18) gebildet ist, dessen Winkelwerte ständig einer Steuerungseinrichtung (26, 23) zufließen, welche den Laserlichtstrahl (19) bei Bewegungen des Ständers (2) in den X- und Y-Koordinaten nachführt.

4. Meßeinrichtung nach Anspruch 1,
dadurch gekennzeichnet,
daß der frei bewegliche und um seine Längsachse drehbare Ständer (2) kopfseitig einen relativ zum Ständer (2) drehbaren Aufsatz (29) aufweist, der mit einem vom Ständer (2) entfernt an einer Halteeinrichtung (13) schwenkbar angeschlossenen Ausleger (33) verbunden ist, welcher ein inkrementales Wegerfassungssystem in Verbindung mit einem am Ständer (2) angeordneten Sensor (32) besitzt, dessen Signalerfassung auf eine senkrechte Drehachse (28) durch den Antastkopf (11) des Meßtaster (10) bezogen ist, wobei die Halteeinrchtung mit dem Ausleger (33) einen Drehgeber (18) aufweist, der ebenso wie das Wegerfassungssystem mit Sensor (32) mit einer Meßwerterfassungs- und Signalverarbeitungseinheit (23, 24) sowie einer Anzeigeeinrichtung (25) in Verbindung steht.

FIG.1

FIG.2